Europäisches Patentamt

European Patent Office

Office européen des brevets

(11) Numéro de publication: **0 341 138 B1**

## (12) FASCICULE DE BREVET EUROPEEN

(45) Date de publication de fascicule du brevet: **25.08.93**

(51) Int. Cl.5: **C02F 1/46**, C25B 9/00, B01D 17/04, B01D 17/06, C25B 11/00, C25C 7/00

(21) Numéro de dépôt: **89401203.8**

(22) Date de dépôt: **27.04.89**

(54) **Procédé et dispositif pour traitement des eaux usées par électrolyse à anode soluble.**

(30) Priorité: **29.04.88 FR 8805763**

(43) Date de publication de la demande:
**08.11.89 Bulletin 89/45**

(45) Mention de la délivrance du brevet:
**25.08.93 Bulletin 93/34**

(84) Etats contractants désignés:
**AT BE CH DE ES FR GB IT LI NL SE**

(56) Documents cités:
DD-A- 114 624     FR-A- 2 134 035
FR-A- 2 459 067   FR-A- 2 533 910
US-A- 4 145 268   US-A- 4 194 972

SOVIET INVENTIONS ILLUSTRATED, semaine 8522 Derwent Publications Ltd, no. 85-133228-22, 11 juillet 1985; & SU-A-1122618 (YAROSL. POLY) 07-11-1984

SOVIET INVENTIONS ILLUSTRATED, semaine 8432, Derwent Publications Ltd, no. 84-200637/22, 19 septembre 1984; & SU-A-1 060 574 (WATERCONSERVATION RES.) 15-12-1983

(73) Titulaire: **ELECTRICITE DE FRANCE Service National**
**2, rue Louis Murat**
**F-75008 Paris(FR)**

(72) Inventeur: **Damien, Alain**
**7, rue Gambetta**
**F-95150 Taverny(FR)**
Inventeur: **Husson, Marie-Hélène**
**37, rue Guizot**
**F-78220 Viroflay(FR)**

(74) Mandataire: **Martin, Jean-Jacques et al**
**Cabinet REGIMBEAU 26, Avenue Kléber**
**F-75116 Paris (FR)**

EP 0 341 138 B1

**Description**

La présente invention a pour objet un procédé de traitement des effluents. Elle concerne plus particulièrement un procédé électrolytique à électrode consommable pour traiter les matières en suspension des colloïdes et les émulsions.

La partie la plus importante et la plus apparente de la pollution des eaux est constituée des matières en suspension et de colloïdes. Si l'élimination des grosses particules, c'est-à-dire d'un diamètre supérieur à 1 μm, est assez aisée, notamment par décantation, centrifugation, filtration ou tamisage, le traitement des particules plus petites, dites colloïdales, nécessite des traitements longs et coûteux, le plus souvent en plusieurs étapes dont la première est un changement d'état qui permette l'agglomération de ces petites particules en particules plus grosses.

Par ailleurs, les émulsions stables, huile dans eau, où l'huile (de 0,5 à 50 %) est maintenue à l'état dispersé par des additifs, et notamment des agents de surface tensioactifs, se développent notamment pour la réfrigération et la lubrification des outils et sont souvent appelées d'une manière générale fluides de coupe. De tels fluides de coupe ne peuvent pas être rejetés directement et nécessitent que l'émulsion soit cassée de manière que l'on obtienne d'une part une phase aqueuse et, d'autre part, une phase riche en hydrocarbures que l'on peut par exemple éliminer par incinération.

Un autre problème à résoudre est l'élimination des dérivés de l'azote et des anions minéraux, tels les nitrites ou les phosphates, qui, outre leur possible toxicité, provoquent l'eutrophisation des cours d'eau.

Pour casser les émulsions, il convient de destabiliser ces dernières, opération qui est désignée dans le domaine du traitement des eaux par le terme coagulation. Lorsque les colloïdes sont déchargés, l'opération qui consiste à agglomérer les colloïdes est désignée par le terme de floculation et peut être réalisée au moyen de polymères le plus souvent hydrosolubles dont les meilleurs sont les polyélectrolytes, qui portent des charges positives et/ou négatives.

Il existe de nombreuses voies pour casser des émulsions. Parmi ces dernières, on peut citer des techniques chimiques qui consistent à rendre moins amphiphiles les agents tensioactifs responsables de l'émulsion, en transformant les molécules chargées en molécules neutres souvent solubles en phase organique (ou phase huileuse), et ce, soit au moyen de sels de minéraux di- tri ou tétravalents, tels que les sels d'alcalinoterreux (essentiellement calcium et magnésium) de fer, d'aluminium ou de titane, soit en changeant le pH de la solution avec de l'acide sulfurique.

Cette technique n'est toutefois pas satisfaisante, car elle transforme une pollution par l'émulsion en une pollution saline ou acide.

Pour ce qui est des polyélectrolytes, leur utilisation est difficile car souvent très spécifique, ce qui nécessiterait une mise au point pour chaque cas particulier.

Parmi les autres traitements possibles, on peut signaler les traitements thermiques, tels que chauffage ou distillation de l'eau ou combustion de la totalité des fluides de coupe, ce qui est extrêmement coûteux en énergie.

On peut également citer les techniques mécaniques ou physiques, telles que la flottation, la coalescence, l'ultrafiltration et la décantation ainsi que les techniques électriques telles l'utilisation des champs électrostatiques et les techniques électrochimiques qui utilisent la charge des gouttelettes d'huile des émulsions.

Parmi les solutions techniques mentionnées ci-dessus, l'incinération et l'ultrafiltration sont les plus fréquemment utilisées. Toutefois ces techniques présentent l'inconvénient soit d'être très coûteuses, soit de laisser une pollution résiduelle élevée.

Une autre technique a été proposée, celle des procédés électrochimiques à anode soluble. Dans ces procédés, les cations susceptibles de provoquer la coalescence des émulsions sont fournis par une anode qui, sous l'effet du courant, met en solution les métaux dont elle est composée. Cette technique, qui présente les avantages des solutions chimiques évoquées ci-dessus, est censée éviter leur inconvénient, à savoir la pollution de la phase aqueuse par des espèces salines ou acides.

Toutefois, malgré son intérêt potentiel, cette technique n'a jamais été utilisée en grande échelle en raison d'inconvénients majeurs.

Le premier de ces inconvénients réside dans la nécessité de façonner ou de couler les anodes nécessaires à la mise en oeuvre de ce procédé. Un tel façonnage est coûteux.

Par ailleurs, il convient de changer fréquemment ces anodes, ce qui implique d'une part une perte de rendement de l'appareillage, et, d'autre part, des frais de main-d'oeuvre et de montage.

En outre, il est apparu que ces anodes se passivaient et se corrodaient de manière inégale pour des raisons non entièrement élucidées, et parmi lesquelles on peut citer le recouvrement des anodes par une couche huileuse et isolante qui réduit fortement l'efficacité électrique du système. Pour éviter ces difficultés, une des solutions proposées est de réduire l'intensité et donc le potentiel ; ce qui entraîne une baisse significative de la capacité de traitement. Une autre solution, d'ailleurs non contradictoire avec la précédente, consiste à sortir les anodes et à les nettoyer plusieurs fois avant dissolution complète.

C'est pourquoi, un des buts de la présente invention est de fournir un procédé électrochimique à anodes solubles qui pallie les inconvénients spécifiés ci-dessus.

Un autre but de la présente invention est de fournir un procédé du type précédent qui soit susceptible de traiter les colloïdes, notamment ceux des effluents urbains ou industriels.

Un autre but de la présente invention est de fournir un procédé de traitement des émulsions huile-dans-eau dont la teneur en huile est comprise entre 0,5 et 50 %, plus spécifiquement de 1 à 30 %.

Un autre but de la présente invention est de fournir un procédé de traitement pour traiter des eaux usées dont la teneur en agent tensioactif est comprise entre 0,01 et 10 %, plus spécifiquement entre 0,1 et 2 %.

Un autre but de la présente invention est de fournir un procédé qui soit susceptible d'abaisser de manière significative la teneur en anions nocifs pour les cours d'eau.

Ces buts et d'autres qui apparaîtront par la suite sont atteints au moyen d'un procédé de traitement des eaux usées dans un dispositif comportant cathode et anode par électrolyse à anode soluble, caractérisé par le fait que ladite anode soluble est constituée par des particules de métal frottant au moins de manière intermittente les unes contre les autres, et par le fait que l'on applique une tension entre anode et cathode. Ce frottement réalise une attrition modérée des particules métalliques.

En effet, au cours de l'étude qui a mené à la présente invention, on a pu démontrer que les défauts évoqués ci-dessus des procédés électrochimiques à anode soluble étaient entièrement palliés par une telle technique, sans qu'il y ait formation de particules colloïdales de tailles sub-microniques, ce qui est fréquent lors des attritions.

De manière surprenante, il a également été montré que le temps de séjour au sein de l'électrolyseur était considérablement réduit (inférieur en général à deux heures) par l'utilisation d'une anode constituée par des particules de métal frottant les unes contre les autres de façon qu'il y ait attrition. Le temps de séjour est en général compris entre 10 secondes et 2 heures, de préférence entre 1 et 30 minutes, les valeurs ci-dessus étant données avec un chiffre significatif.

En outre, lesdites particules forment un lit dont le volume peut être choisi par rapport au débit de fluide à traiter. Ce dernier passe de préférence dans une proportion significative à travers ledit lit.

Lorsque le traitement correspondant à un seul passage est insuffisant, il est possible de réitérer soit par recyclage dans le même dispositif, soit par un traitement dans une cascade d'appareils similaires.

Les moyens d'amenée du courant électrique font appel à des matériaux et à des techniques connues en elles-mêmes. De préférence, le matériau d'amenée du courant est choisi de manière à n'être ni corrodable par les réactions électrochimiques anodiques, ni érodable par le frottement.

Les particules métalliques, peuvent être réalisées en métal ou en alliage métallique, tel que le composé intermétallique de fer et d'aluminium (déchets de l'industrie du zinc ou de la galvanisation au trempé) ou peuvent être un mélange de particules de divers métaux.

Afin de favoriser le contact électrique des particules entre elles et avec l'amenée de courant, il est possible de rajouter en proportion notable (à titre indicatif environ un à neuf dixième en volume) des particules conductrices mais électro-insolubles, telles que par exemple des fragments de graphite. Ces fragments se rapprochent de préférence, d'une forme sphérique. Il a été montré que cette technique présente l'avantage lorsque cela est désiré, de faciliter l'oxydation et/ou l'élimination d'espèces chimiques polluantes ou eutrophisantes, tout en aidant à la coagulation lorsque des zones acides sont formées (sulfate et équivalents).

Le frottement des particules de métal les unes contre les autres peut être réalisé par toute technique connue en soi, telle que par exemple agitation mécanique, vibration directe ou indirecte du lit, et les techniques de broyage suffisamment ménagées pour qu'il n'y ait qu'une usure superficielle et non une comminution brutale.

Le frottement peut être réalisé de manière continue et de préférence discontinue. En effet, une attrition intermittente donne de très bons résultats et évite une perte significative de conductivité lors de l'opération d'attrition. A titre indicatif, une bonne manière de procéder consiste à laisser le lit anodique à l'état immobile, jusqu'à ce que l'on ait constaté une baisse significative (d'un dixième à la moitié environ avantageusement aux alentours d'un tiers) de l'intensité ; puis, provoquer l'attrition pendant une durée suffisante pour permettre de revenir à l'intensité initiale (le courant pouvant être coupé pendant la période d'attrition). Le choix du rapport des durées de repos et d'attrition se détermine de préférence en maximisant l'intensité moyenne, toute chose étant égale par ailleurs.

3

Il convient de signaler que la conductivité du milieu croît avec l'électo-coalescence et une forte augmentation de la conductivité apparente du milieu dans le cas des fluides de coupe indique la fin de l'opération désirée. Cette propriété pourra être utilisée pour asservir les dispositifs mettant en oeuvre le présent procédé, en particulier cette propriété pourra être utilisée pour la mise en oeuvre d'automates programmables.

Les mises en oeuvre de la présente invention qui permettent d'éviter la présence de diaphragme sont préférées, et ce notamment pour traiter les solutions et émulsions ayant un fort caractère colloïdal. En d'autres termes, selon une réalisation préférée de la présente invention, on utilise un système ayant une cathode distincte de l'anode, l'anode et la cathode étant disposées de manière que le courant passe directement de l'une à l'autre au travers du fluide à purifier. Le terme directement signifie ici qu'il n'y a pas de diaphragme.

Selon un mode particulièrement avantageux de la présente invention, le frottement des particules est assuré par le mouvement d'un tambour les contenant, lequel tambour assure l'alimentation en courant desdites particules.

Le mouvement du tambour peut avantageusement être soit une oscillation, soit de préférence une rotation, continue ou discontinue, autour de son axe.

L'axe du tambour est de préférence sensiblement horizontal, c'est-à-dire que son angle avec l'horizontal est au plus égal à 20°, de préférence au plus égal à 10°.

Le tambour ne doit pas être rempli de granulés métalliques au-delà de la quantité qui risque de provoquer un court-circuit.

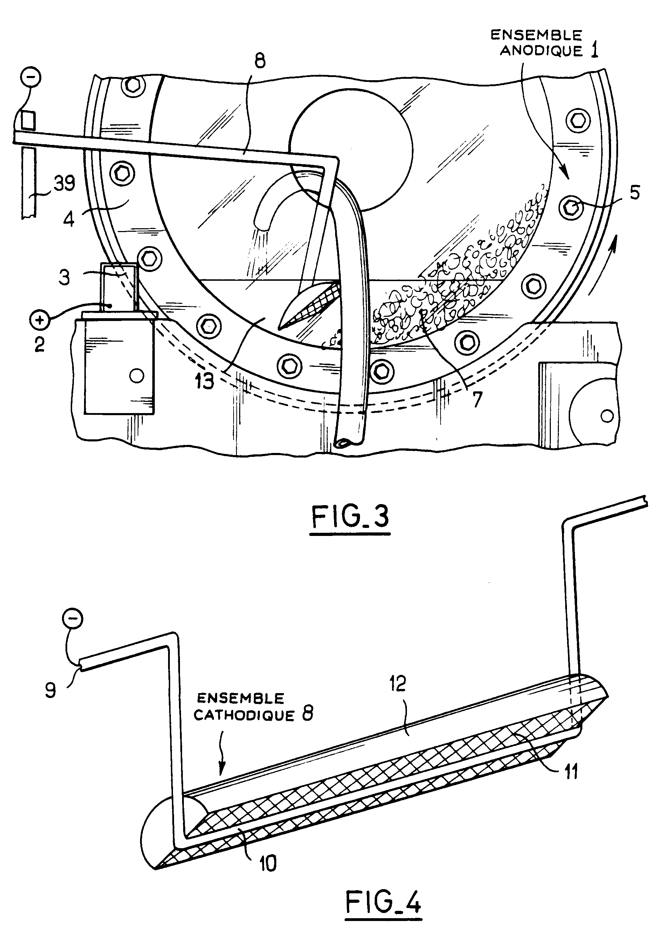

Pour que le tambour puisse assurer un contact électrique avec les particules constituant l'anode, il convient que ledit tambour soit au moins en partie conducteur. La conduction doit être réalisée par un matériau qui résiste à la fois à l'attaque électrochimique due aux reactions anodiques, et à l'abrasion provoquée par les particules métalliques formant anode. Selon une mise en oeuvre préférée de la présente invention, le tambour est réalisé dans une matière non-conductrice et est équipé d'amenées de courant réalisées de préférence en graphite. Ces amenées de courant sont avantageusement des barreaux de graphite placés à intervalles réguliers selon les génératrices du cylindre du tambour. Il est avantageux, pour éviter les courants parasites, que lesdits barreaux n'existent, ne soient conducteurs, ou ne soient connectés au générateur redresseur que sur une section du tambour. Dans les deux premiers cas, l'appareillage de mise en oeuvre de la présente invention étant alors de préférence équipé d'un dispositif qui lui permet d'assurer que la section conductrice soit toujours à la même place pendant l'électrolyse proprement dite, dans le cas d'un système où l'attrition n'a lieu que de manière discontinue. Ainsi, le tambour est de préférence équipé d'un capteur de fin de course qui permet d'assurer un positionnement idéal des barreaux conducteurs. A l'arrêt, la section conductrice doit être dans une position telle qu'elle assure l'alimentation des particules d'un métal formant l'anode. A titre indicatif, la section conductrice pourrait, si l'on se réfère à la figure 3, être constituée par les barreaux situés sur l'arc compris entre l'intersection la plus basse de la verticale avec le tambour et le niveau du liquide figuré du côté où sont représentées les grenailles ou bien jusqu'au barreau désigné par la "queue de cerise" 5.

Selon ce mode opératoire préféré, les barreaux de graphite jouent un double rôle de vecteur de courant et de dispositif pour relever les particules anodiques et provoquer ainsi l'attrition par effet de cascade. Ces deux fonctions peuvent être disjointes et l'on peut remplacer une partie des barreaux de graphite par des échelons, ou des nervures, qui permettent de relever les particules dans le tambour. Le contact électrique peut alors être réalisé avec des barreaux en graphite placés de manière qu'ils soient moins soumis à l'érosion ; il est possible également de concevoir non plus des barreaux de graphite mais des plaques de graphite ou toute autre forme.

Un des avantages de la technique est que la forme des particules est relativement indifférente, et que l'on peut utiliser des déchets de diverses industries métallurgiques, dès lors que la composition de ces déchets ne risque pas de provoquer la pollution des effluents.

La taille des particules est de préférence comprise entre 1 mm et la moitié de la distance entre anode et cathode, avantageusement entre 1 mm et 2 cm.

La vitesse de rotation est choisie de manière à assurer une bonne attrition des particules, tout en maintenant, si besoin est, le contact électrique. A titre indicatif, une vitesse comprise entre 10 et 30 % de la vitesse critique peut donner de bons résultats.

Le métal, ou l'alliage, constitutif des particules formant anode doit être choisi parmi les métaux dont les cations provoquent une bonne coalescence des émulsions et des colloïdes. Il existe une relation entre la charge du cation et l'aptitude à la coalescence des colloïdes : plus la charge est élevée, meilleure est la coalescence. Parmi ces métaux, on peut citer ceux auxquels il est fait référence dans les ouvrages suivants : le Mémento Technique de l'Eau, 8ème édition, publié par la société Degrémont en 1968, le Manuel de

4

l'Eau de Franck N. Kemmer et de John McCallion, publié par Lavoisier, et "Chemical Processes in Waste Water Treatment" de W.J. Eilbeck et G. Mattock, publié par Ellis Horwood Limited et John Wiley & Sons.

Les métaux préférés sont l'aluminium et le fer en raison de leur innocuité pour leur environnement et de leur faible prix. Dans certains usages, le magnésium donne de très bons résultats. En outre, il existe un marché de recyclage de déchets de ces métaux utilisables dans la technique selon la présente invention.

La différence de potentiel à appliquer entre la cathode et l'anode diffère selon le métal employé et dépend des réactions annexes désirées, telles que par exemple l'oxydation en nitrate de l'azote dissous à différents états d'oxydation (nitrite, ammoniac, ...). Dans le cas du fer, les conditions opératoires (surtension par rapport au potentiel de repos) doivent de préférence être telles que le fer se dissolve à l'état ferrique.

Le potentiel appliqué entre anode et cathode est de préférence entre 10 et 100 volts ; avantageusement, le potentiel est relativement élevé lorsqu'il s'agit de coaguler des fluides à fort pourcentage d'éléments colloïdaux comme par exemple les fluides de coupe. Dans ce cas, on choisit une différence de potentiel entre environ 20 et environ 50 volts. Une valeur moyenne satisfaisante est située aux alentours de 30 volts. Lorsque le fluide à traiter comporte peu d'éléments colloïdaux, il convient de choisir un potentiel relativement peu élevé, en général, entre 10 et 20 volts de préférence 10 volts. Toutes les valeurs de ce paragraphe ne sont données qu'avec un seul chiffre significatif.

Pour assurer un minimum de conductivité à la solution, il est, dans certains cas, opportun d'ajouter des sels qui serviront d'électrolytes et assureront la conductivité de la phase aqueuse. Comme sels, on peut citer les alcalins et alcalino-terreux tels que le sulfate de magnésium et le chlorure de calcium, les chlorures sont préférés lorsque de l'aluminium se trouve à l'anode.

Ces sels sont ajoutés pour atteindre des concentrations en électrolyte comprises entre milli- et decinormales, de préférence entre milli et centinormales. La normalité est définie ici par référence à la charge des espèces ionisées mises en solution. Ainsi, une solution de chlorure de sodium molaire est aussi une solution normale.

La présente invention présente l'avantage de n'être beaucoup moins dépendant de la température que les procédés précédents. Il donne en particulier des résultats satisfaisants à température ambiante (c'est-à-dire entre environ 18°C et 30°C), il donne également de très bons résultats à des températures inférieures tant que l'eau n'est pas gelée ni l'huile figée.

Le pH est avantageusement compris entre environ 5 et environ 9 de préférence entre environ 7 et environ 8.

La présente technique est particulièrement adaptée aux agents tensioactifs anioniques (sulfonate, acide gras...) ou formant des complexes neutres avec le métal de l'anode et les espèces en solutions.

Un autre but de la présente invention est de fournir un dispositif qui permette la mise en oeuvre du procédé qui vient d'être décrit.

Ce but est atteint au moyen d'un dispositif électrolytique comportant un ensemble anodique porteur des particules de métal électrosolubles, un ensemble cathodique, un moyen d'amenée du fluide à électrolyser, des moyens d'amenée le courant électrique à l'ensemble anodique et à l'ensemble cathodique, caractérisé par le fait que ledit ensemble anodique est solidaire de, ou forme la cuve de l'électrolyseur et par le fait qu'il comporte des moyens d'agitation desdites particules de métal électrosolubles.

L'ensemble anodique peut être mobile et ledit moyen d'agitation peut être un moyen de mise en mouvement de l'ensemble anodique mobile.

L'ensemble anodique porteur des particules de métal électrosolubles est de préférence un tambour de forme sensiblement cylindrique et de révolution. Avantageusement ce tambour est en matière isolante et est équipé de barreaux placés sensiblement selon les génératrices du cylindre du tambour.

Un tambour perforé ne donne guère satisfaction, car d'une part, les particules usées par l'électro-dissolution et par l'attrition passent au travers des perforations et d'autre part, lorsque la cathode est placée à l'extérieur du tambour, le tambour a tendance à se boucher et à former une isolation électrique en empêchant le passage du courant entre anode et cathode. Ainsi, un tambour essentiellement exempt de perforation est préféré, ledit tambour formant la cuve d'électolyse.

Les barreaux sont disposés à des intervalles tels qu'au moins un barreau soit en contact avec la masse de particules métalliques formant anode.

Lesdits barreaux sont avantageusement reliés à une couronne conductrice qui sert d'amenée de courant. Les barreaux peuvent être en tantale et avantageusement en graphite ou en composite conducteur à base de carbone ou de graphite.

La cathode peut être réalisée d'une manière connue en soi. Il convient toutefois qu'elle soit conçue de manière à éviter des courts-circuits avec le lit de particules de métal formant anode et placée de manière que l'on évite tout obstacle électrique entre anode et cathode ; de préférence, la cathode est disposée au voisinage de l'axe du tambour.

On peut prévoir en amont du dispositif selon l'invention un réservoir contenant la solution à traiter et une cuve de décantation pour séparer la phase huileuse de la phase aqueuse.

La description qui suit est un exemple de réalisation préféré du dispositif selon l'invention qui permettra à l'homme de métier de mieux comprendre ledit dispositif.

La description se réfère aux figures suivantes :

La figure 1 qui constitue une vue d'ensemble du dispositif selon la présente invention vu du côté alimentation,

La figure 2 représente une vue d'ensemble vue du côté évacuation,

La figure 3 représente en détail le système d'amenée de courant et d'amenée du fluide à électrolyser,

La figure 4 enfin montre un mode de réalisation de la cathode.

L'appareil décrit ci-après, et dont le fonctionnement est décrit dans les exemples, est prévu pour constituer une entité autonome, mais la description, où n'est exemplifié le fonctionnement dans le seul cas d'un fluide de coupe, est également valable pour le tambour seul et son entraînement séparé de la partie réservoir.

Le réservoir 33 monté sur roulettes avec frein 36 contient la solution à traiter. Deux témoins 34, situés de part et d'autre du réservoir, sont prévus pour l'observation du contenu. En dessous, dans un logement étanche, une pompe 27 prélève le liquide de la partie inférieure du réservoir, l'envoie au travers d'un circuit 28 équipé d'une vanne ou robinet vers le tambour 17 à axe sensiblement horizontal pour le traitement, ou vers la vidange au travers d'un circuit 29 avec vanne, ou robinet.

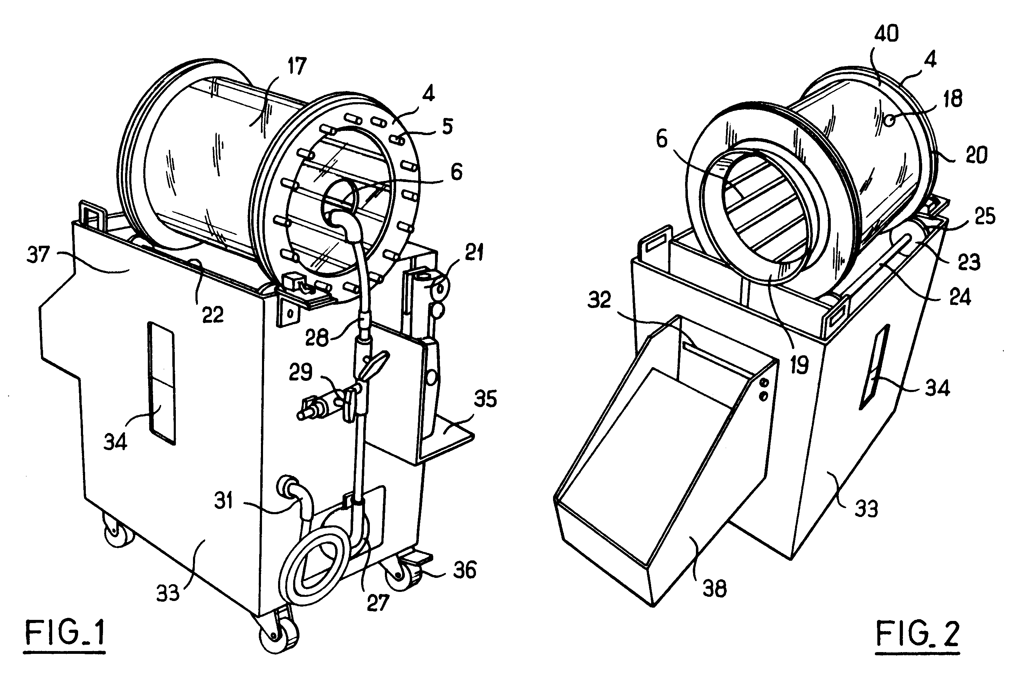

Dans le tambour, l'eau circule de droite à gauche sur la vue d'ensemble 1. L'ouverture de droite est de faible diamètre. Celle de gauche (fig. 2) est de diamètre plus important. La solution déborde par le déversoir 19 directement dans le réservoir 33 solidaire avec ou fusionne avec le support tambour 37.

Pendant le traitement, la solution circule en continu ou en discontinu dans le tambour, suivant les besoins.

Après l'électrolyse, dans le cas des émulsions, on laisse la solution traitée décanter, et l'on observe par les témoins 34 deux phases (phase supérieure huileuse, phase inférieure aqueuse). Pour éviter de pomper l'huile, on utilise un système d' injection d'eau 31. Le niveau de l'interface huile/eau est relevé jusqu'au déversoir 32. Les hydrocarbures sont récupérés dans le bac de réception d'huile 38. On arrête alors l'injection d'eau, et la pompe 27 vidange par 29 la totalité de l'eau.

Le tambour 17 tel que représenté dans les figures 1, 2, présente les caractéristiques suivantes : Il est réalisé en PVC, il présente deux ouvertures de diamètres différents, présente deux gorges ou rainures 20 à chaque extrémité. L'entraînement du tambour est assuré par le moteur 21, un axe d'entraînement 22 dans le prolongement de celui du moteur, et des galets 25 montés sur des poulies 23 solidaires de l'axe d'entraînement 22. L'autre axe 24 est libre et supporte aussi deux poulies 23 montées avec des galets 25.

A l'intérieur, le long de la paroi, les barreaux graphites 6. les barreaux traversent la couronne en PVC n° 40 et viennent au contact de la couronne de cuivre 4. L'étanchéité du tonneau au niveau des barreaux 6 est réalisée de manière connue en soi par exemple par un système de joints et de presse-étoupes 5. Sur la figure 1 une petite vis 18 est prévue pour vidanger si nécessaire le tambour en fin de manipulation. Dans la figure 3, le contact électrique en cuivre 3, est relie par un système de liaison du pôle positif au générateur de courant continu (redresseur), est fixe par rapport au tambour et plaqué sur la couronne par un ressort. Sur cette vue (figure 3) le tambour contient l'aluminium 7 et l'on peut observer la pente caractéristique prise par le matériau dispersé et qui est dépendant du sens de rotation (ici sens trigonométrique figuré par une flèche). On retrouve aussi, par le niveau du liquide, la hauteur du déversoir 19.

L'ensemble anodique regroupe, outre le tambour 17 proprement dit, le contact sur la couronne 3, la couronne de cuivre 4, les barreaux de graphite 6, l'aluminium, le fer, ou le magnésium 7, est en contact avec le fluide à traiter. Des supports de cathode 39 sont fixés de part et d'autre, a chaque extrémité du tambour, sur le réservoir 33, et permettent un réglage en hauteur.

En se référant à la figure 4, l'ensemble cathodique 8 est connecté par un système de liaison au pôle négatif 9 du générateur et comprend un tube Inox 10, d'un grillage Inox 11 et une protection en PVC ou en plastique mou 12. Il se place dans le tambour. Le grillage 11 doit être parallèle au lit d'aluminium, sans le toucher.

Des systèmes de mesure non figurés tels que voltmètre, ampèremètre ainsi que des automates programmables peuvent pourvoir ce dispositif afin d'en mieux contrôler et d'en mieux réguler la marche.

Les exemples non limitatifs suivants permettent à l'homme de métier de mieux se rendre compte de la mise en oeuvre et des avantages du procédé selon la présente invention.

6

Exemple 1 : Traitement d'un fluide de coupe :

73,5 titres d'une suspension de 3,5 litres d'huile dans 70 litres d'eau auquel on a ajouté du chlorure de calcium à raison de 0,3 g par litre a été soumis à une électrolyse dans le dispositif décrit ci-dessus. 70 l eau + 3,5 l huile soluble = 73,5 l
Ajout CaCl2 : 0,3 g/l

|  | AVANT | APRES | % EPURATION |
|---|---|---|---|
| DCO (NFT90-105) | 127 900 mg 02/L | 2 306 | 98,2 |
| Matière carbonée | 17 200 ppm | 52 | 99,7 |
| CHLORURE |  | 0,32g Cl/L |  |
| PH + CaCl2 (NFT90-008) | 7,82<br>8,08 | 8,61 |  |
| CONDUCTIVITE + CaCl2 (NFT90-111) | 0,71 mS<br>1,3 | 1,15 |  |
| CONSOMMATION ENERGETIQUE |  | 24,6 kWh/t |  |
| CONSOMMATION ALUMINIUM |  | 243g Al/t |  |

Exemple 2 : Essai sur des eaux de station urbaine :

Les eaux choisies pour cet essai proviennent d'une station d'épuration de la région parisienne collectant essentiellement des eaux de communes, et très peu de rejets industriels.
Dans la station d'épuration l'effluent est soumis aux opérations successives suivantes :
dégrillage
déssablage
décantation primaire
épuration biologique
décantation secondaire
digestion des boues
séchage des boues digérées.
L'essai d'électrocoagulation a porté sur de l'eau prélevée entre la décantation primaire et l'épuration biologique. En effet, il est intéressant de conserver les trois premières opérations qui nécessitent des ouvrages peu sophistiqués. L'aération nécessaire à l'épuration biologique utilise des soufflantes dotées de moteurs de 220 kW. C'est donc une des opérations les plus coûteuses, où le temps de séjour est d'environ deux heures.

Volume traité :     55 litres
Energie :     0,93 kWh/tonne
Masse de fer :     en considérant le rendement faradique unitaire on obtient 37 g de fer par tonne. Ceci représente le maximum possible dissous. Le chiffre exact est inférieur.

| Composants et norme utilisée | Eau brute | Eau traitée | % d'épuration |
|---|---|---|---|
| MES*mg/l NFT90-105 | 99 | 108 | |
| | | Sur filtré | |
| DCO* mg02/l NFT90-101 | 197 | 56 | 72 |
| DBO* mg02/l NFT90-103 | 80 | 20 | 75 |
| Conductivité microS/cm 20°C NFT90-111 | 1140 | 1085 | |
| pH NFT90-008 | 7,1 | 7,7 | |
| Phosphore total mgP/l NFT90-023 | 5,21 | 0,38 | 93 |
| Azote KJELDHAL mgN/l NFT90-110 | 46,2 | 39,2 | 15 |
| | Sur le filtré | | |
| Ammonium mgN/l NFT90-115 | 29,2 | 23 | 21 |
| Nitrites mgN/l NFT90-013 | 0,78 | 0,23 | 70 |
| Nitrates mgN/l NFT90-012 | 0,01 | 3,2 | |
| Orthophosphates mgP/l NFT90-023 | 4,09 | 0,05 | 99 |

\* DCO = Demande chimique en oxygène NFT90-101

   DBO = Demande biologique en oxygène NFT90-103

   MES = Matière en suspension -

Les analyses de l'eau traitée ont toutes été effectuées (sauf MES, matières en suspension) sur le filtré, puisque le procédé électrochimique permet de coaguler les matières colloïdales. Il est nécessaire après application du procédé de réaliser une décantation, au même titre qu'après une épuration biologique.

Les dosages ammonium, nitrates, nitrites, orthophosphates se font suivant les normes sur les échantillons filtrés.

On constate que de manière surprenante et non élucidée, le procédé électrochimique permet de traiter DCO, DBO, orthophosphates et phosphore total, et qu'une partie de l'azote ammoniacal et des nitrites sont oxydés en nitrates. C'est bien ce que l'on cherche à réaliser dans les stations d'épuration. La réduction des nitrates en azote moléculaire $N_2$ est une étape biologique anaérobie. Mais seules quelques stations sont équipées pour cette transformation finale des nitrates.

La teneur en fer dans l'eau traitée filtrée est de 0,15 mgFe/L, l'échantillon avant traitement contenait 1,8 mgFe/L.

Le temps de séjour dans l'installation a été d'environ 6 minutes.

Le présent exemple montre combien la présente invention est économe en énergie et est capable d'améliorer la capacité de traitement.

Exemple 3 : Traitement d'émulsion huile-eau

Une émulsion huile-eau provenant des eaux de fabrication d'usine et des eaux des cuvettes de rétention des citernes de stockage d'huiles, est stockée pendant plusieurs jours. Périodiquement, ce mélange est soumis au procédé usuel en la matière qui consiste en un traitement chimique au sulfate d'aluminium à chaud suivi d'une neutralisation à la lessive de soude. Après cette opération chimique, une décantation a lieu, les boues surnageantes et huileuses sont récupérées pour l'incinération, cependant que l'eau est rejetée comme effluent épuré.

Le procédé d'électrocoagulation selon la présente invention est réalisé sur le site dans des conditions permettant la comparaison entre le traitement chimique usuel et l'électrocoagulation selon l'invention. Deux essais d'électrocoagulation sont rapportés ici, le premier porte sur 5 litres (contenu du tambour), et le deuxième porte sur 1 tonne traitée en continu.

Les conditions opératoires du premier de ces essais sont indiquées ci-dessous.

a) Condition opératoire et consommable

| | Procédé chimique | Electrocoagulation |
|---|---|---|
| Echantillon brut volume | 28 m$^3$ | 5 litres |
| Produits consommés | 1 sac de sulfate d'Al noisette RP, 50 kg 1,5 tourie de lessive de soude à 30,5 % tourie de 30 litres | Aluminium nuggets 0,29 g/l |
| Energie consommée | chauffage de 30°C à 80, (ou 90°C) soit 58 kWh/t ou 69 kWh/t | Electrochimique 21,5 kWh/t |

b) Analyse

| | Echantillon brut filtré | Après procédé chimique décanté, filtré | Après procédé d'Electrocoagulation décanté, filtré |
|---|---|---|---|
| pH | 7,4 | 9,6 | 7,5 |
| Conductivité mS | 2,4 | 4,3 | 2,2 |
| DCO mg O$_2$/l | 5774 | 4850 | 4810 |
| Hydrocarbures ppm | 233 | 183 | 116 |

Essais en continu

Caractéristiques de fonctionnement :

La pompe alimente le tambour à raison de 20 à 50 l/h, alors que l'excédent pompé (la pompe fournit 2100 l/h) est renvoyé dans la cuve de stockage. On protège ainsi la pompe, et le brassage de l'échantillon durant toute la durée du traitement assure une qualité égale dans le traitement. En sortie de tambour l'eau électocoagulée est stockée en réservoir avant vidange dans le décanteur.

Le tambour est mis en rotation 3 minutes toutes les demi-heures (par programmateur). L'alimentation électrique est régulée pour une intensité 1 de 10 ampères. La tension U aux bornes de l'électrolyseur varie de 20 à 40 Volts.

Cet essai a été réalisé sur un autre lot que l'essai 1. Les résultats ainsi que l'analyse de départ sont rassemblés dans le tableau ci-après.

| | Echantillon brut filtré | Après procédé chimique décanté, filtré | Après procédé d'Electrocoagulation décanté, filtré |
|---|---|---|---|
| pH | 7,6 | 7,3 | 8,0 |
| Conductivité mS | 4,6 | 6,5 | 4,2 |
| DCO mg $O_2$/l | 12 650 | 6200 | 5820 |
| Hydrocarbures ppm | 1 460 | 61 | 12 |

Puis, cet essai a permis d'évaleur le bilan des consommables nécessaires pour la mise en oeuvre d'électrocoagulation. Ce bilan est indiqué ci-après.

| Evaluation du prix de revient du traitement par électrocoagulation | |
|---|---|
| Energie totale consommée | 25 kWh/t |
| Energie électrochimique | 15 kWh/t |
| Quantité d'électricité | (10* 50) Ah |
| Débit moyen | 20 l/h |
| Temps de traitement | 50 heures |
| Quantité traitée | 1 tonne |
| Quantité d'aluminium consommée | 130 g |

## Revendications

**1.** Procédé de traitement des eaux usées dans un dispositif selon l'une des revendications 10 à 17, caractérisé par le fait que ladite anode soluble est constituée par des particules de métal frottant au moins de manière intermittente les unes contre les autres, et par le fait que l'on applique une tension entre anode et cathode.

**2.** Procédé de traitement selon la revendication 1, caractérisé par le fait que lesdites eaux usées sont des émulsions huile dans eau dont la teneur en huile est comprise entre 0,5 et 50, de préférence de 1 à 30 %.

**3.** Procédé selon la revendication 1, caractérisé par le fait que la teneur en agent tensio-actif est comprise entre 0,01 et 10 %, de préférence entre 0,1 et 2 %.

**4.** Procédé selon l'une des revendications 1 à 3, caractérisé par le fait que l'on ajoute auxdites eaux usées un sel dissocié choisi dans un groupe constitué par les chlorures alcalins, alcalino-terreux et leurs mélanges et par le fait que ledit sel est ajouté à une concentration comprise entre mN et dN.

**5.** Procédé selon l'une des revendications 1 à 4, caractérisé par le fait que le temps du séjour dans la zone de l'électrolyse est compris entre 10 secondes et 2 heures et de préférence entre 1 et 30 minutes.

**6.** Procédé selon l'une des revendications 1 à 5, caractérisé par le fait que le procédé est réalisé dans un tambour dont la rotation assure le frottement de particules de métal les unes contre les autres, et par le fait que la vitesse de rotation du tambour est choisie parmi celles qui donnent une bonne attrition des particules, avantageusement la vitesse de rotation du tambour est comprise entre 5 et 30 % de la vitesse critique.

**7.** Procédé selon la revendication 6, caractérisé en ce que la vitesse de rotation du tambour est comprise entre 5 et 30 % de la vitesse critique.

**8.** Procédé selon les revendications 1 à 6 prises séparément, caractérisé par le fait que la différence de potentiel entre anode et cathode est compris entre 10 et 100 volts.

**9.** Procédé selon la revendication 8, caractérisé en ce que la différence de potentiel entre anode et cathode est comprise entre 20 et 100 volts.

**10.** Dispositif électrolytique pour mettre en oeuvre le procédé de l'une des revendications 1 à 9, comportant un ensemble anodique (1) soluble, un ensemble cathodique (8), un moyen (27) d'amenée du fluide à électrolyser, un moyen d'évacuation (19) du fluide électrolysé, des moyens (2 et 9) d'amenée du courant électrique à l'ensemble anodique et à l'ensemble cathodique, caractérisé par le fait (i) que l'ensemble anodique est solidaire de ou forme la cuve de l'électrolyseur et supporte les particules anodiques, par le fait qu'il comporte aussi un moyen d'agitation des particules, par le fait que ledit ensemble anodique est mobile, constitue ledit moyen d'agitation et est un tambour mobile autour de son axe (17) de forme sensiblement cylindrique et par le fait que ledit tambour est réalisé en matière isolante et est équipé de barreaux (6) placés sensiblement selon les génératrices du cylindre, lesdits barreaux étant connectés à une couronne (3) conductrice d'amenée du courant et (ii) que l'ensemble cathodique se trouve dans le tambour.

**11.** Dispositif selon la revendication 10, caractérisé par le fait que lesdits barreaux sont réalisés en matériau choisi dans le groupe constitué par le graphite et par les matériaux composites à base de fibres de carbone et par ceux à base de fibres de graphite.

**12.** Dispositif selon l'une des revendications 10 ou 11, caractérisé par le fait que l'ensemble cathodique est constitué d'un tube Inox (10) d'un grillage Inox (11) et d'une protection en matière élastique isolante (12).

**13.** Dispositif selon l'une des revendications 10 à 12. caractérisé par le fait que lesdits barreaux sont montés sur la face interne du cylindre.

**14.** Dispositif selon l'une des revendications 10 à 13, caractérisé par le fait que lesdits barreaux ne sont conducteurs que sur une section du tambour.

**15.** Dispositif selon l'une des revendications 10 à 14, caractérisé par le fait que la cathode est distincte de l'anode, l'anode et la cathode étant disposées de manière que le courant passe directement de l'une à l'autre, au travers le fluide à purifier.

**16.** Dispositif selon l'une des revendications 10 à 15, caractérisé par le fait que la cathode est massive.

**17.** Dispositif selon les revendications 10 à 16, caractérisé par le fait que l'axe du tambour est sensiblement horizontal.

## Claims

**1.** Method for treating waste water in a device according to one of Claims 10 to 17, characterised by the fact that the said soluble anode consists of particles of metal rubbing at least intermittently against each other, and by the fact that a voltage is applied between anode and cathode.

**2.** Treatment method according to Claim 1, characterised by the fact that the said waste water is an emulsion of oil in water, the oil content of which is between 0.5 and 50, and preferably 1 to 30%.

**3.** Method according to Claim 1, characterised by the fact that the surfactant content is between 0.01 and 10%, and preferably between 0.1 and 2%.

**4.** Method according to one of Claims 1 to 3, characterised by the fact that a dissociated salt chosen from a group consisting of alkaline chlorides, alkaline-earths and mixtures thereof is added to the said waste water and by the fact that the said salt is added at a concentration of between mN and dN.

**5.** Method according to one of Claims 1 to 4, characterised by the fact that the residence time in the electrolysis region is between 10 seconds and 2 hours and preferably between 1 and 30 minutes.

**6.** Method according to one of Claims 1 to 5, characterised by the fact that the method is carried out in a drum, the rotation of which brings about the rubbing of the metal particles against each other, and by the fact that the speed of rotation of the drum is chosen from amongst those which give good attrition of the particles, the speed of rotation of the drum advantageously being between 5 and 30% of the critical speed.

**7.** Method according to Claim 6, characterised in that the speed of rotation of the drum is between 5 and 30% of the critical speed.

**8.** Method according to Claims 1 to 6 taken separately, characterised by the fact that the potential difference between anode and cathode is between 10 and 100 volts.

**9.** Method according to Claim 8, characterised in that the potential difference between anode and cathode is between 20 and 100 volts.

**10.** Electrolysis device for implementing the method of one of Claims 1 to 9, having a soluble anode assembly (1), a cathode assembly (8), means (27) for bringing in the fluid to be electrolysed, means for discharging (19) the electrolysed fluid, means (2 and 9) for bringing electric current to the anode assembly and to the cathode assembly, characterised by the fact (i) that the anode assembly is integral with or forms the electrolyser tank and supports the anode particles, by the fact that it also includes means of agitating the particles, by the fact that the said anode assembly is movable, constitutes the said agitation means and is a drum (17) which is movable about its axis and is substantially cylindrical in shape and by the fact that the said drum is produced from insulating material and is equipped with bars (6) positioned substantially along the generatrices of the cylinder, the said bars being connected to a conducting ring (3) for conveying the current and (ii) that the cathode assembly is located in the drum.

**11.** Device according to Claim 10, characterised by the fact that the said bars are produced from a material chosen from the group consisting of graphite and composite materials based on carbon fibres and those based on graphite fibres.

**12.** Device according to one of Claims 10 or 11, characterised by the fact that the cathode assembly consists of a stainless steel tube (10), a stainless steel grid (11) and a cover made from insulating elastic material (12).

**13.** Device according to one of Claims 10 to 12, characterised by the fact that the said bars are mounted on the internal face of the cylinder.

**14.** Device according to one of Claims 10 to 13, characterised by the fact that the said bars are conductive only over a section of the drum.

**15.** Device according to one of Claims 10 to 14, characterised by the fact that the cathode is separate from the anode, the anode and the cathode being disposed so that the current passes directly from one to the other, through the fluid to be purified.

**16.** Device according to one of Claims 10 to 15, characterised by the fact that the cathode is solid.

**17.** Device according to Claims 10 to 16, characterised by the fact that the axis of the drum is substantially horizontal.

**Patentansprüche**

**1.** Verfahren zum Behandeln von Abwässern in einer Vorrichtung nach einem der Ansprüche 10 bis 17, dadurch gekennzeichnet, daß die lösliche Anode aus Metallteilchen gebildet wird, die wenigstens zeitweise aneinander reiben, und daß zwischen Anode und Kathode eine Spannung gelegt wird.

**2.** Verfahren zum Behandeln nach Anspruch 1, dadurch gekennzeichnet, daß die Abwässer Öl-in-Wasser-Emulsionen sind, deren Ölgehalt zwischen 0,5 und 50, vorzugsweise zwischen 1 und 30% liegt.

**3.** Verfahren nach Anspruch 1, dadurch gekennzeichnet, daß der Gehalt des spannungsaktiven Mittels zwischen 0,01 und 10%, vorzugsweise 0,1 und 2% liegt.

**4.** Verfahren nach einem der Ansprüche 1 bis 3, dadurch gekennzeichnet, daß man den besagten Abwässern ein dissoziiertes Salz zusetzt, das aus einer Gruppe gewählt wird, die aus Alkalichloriden, Erdalkalichloriden und deren Mischungen besteht, und daß dieses Salz in einer Konzentration zwischen mN und dN zugegeben wird.

**5.** Verfahren nach einem der Ansprüche 1 bis 4, dadurch gekennzeichnet, daß die Verweilzeiten im Elektrolysebereich zwischen 10 Sekunden und 2 Stunden, vorzugsweise zwischen 1 Minute und 30 Minuten liegen.

**6.** Verfahren nach einem der Ansprüche 1 bis 5, dadurch gekennzeichnet, daß das Verfahren in einer Trommel durchgeführt wird, deren Rotation für die Reibung der Metallteilchen aneinander sorgt, und daß die Drehgeschwindigkeit unter denjenigen Geschwindigkeiten gewählt ist, die einen guten Abrieb der Teilchen liefern, wobei vorzugsweise die Drehgeschwindigkeit der Trommel zwischen 5 und 30% der kritischen Geschwindigkeit liegt.

**7.** Verfahren nach Anspruch 6, dadurch gekennzeichnet, daß die Drehgeschwindigkeit der Trommel zwischen 5 und 30% der kritischen Geschwindigkeit liegt.

**8.** Verfahren nach den Ansprüchen 1 bis 6 jeweils, dadurch gekennzeichnet, daß der Potentialunterschied zwischen Anode und Kathode zwischen 10 und 100 V liegt.

**9.** Verfahren nach Anspruch 8, dadurch gekennzeichnet, daß der Potentialunterschied zwischen Anode und Kathode zwischen 20 und 100 V liegt.

**10.** Elektrolytische Vorrichtung zur Durchführung des Verfahrens nach einem der Ansprüche 1 bis 9 mit einer löslichen Anodenanordnung (1), einer Kathodenanordnung (8), einer Einrichtung (17) zum Zuführen einer Elektrolyseflüssigkeit, einer Einrichtung (19) zum Abführen der Elektrolyseflüssigkeit, Einrichtungen (2 und 9) zur elektrischen Stromversorgung der Anodenanordnung und der Kathodenanordnung, dadurch gekennzeichnet, daß (i) die Anodenanordnung fest am Elektrolysebehälter angebracht ist oder den Elektrolysebehälter bildet und anodische Teilchen trägt, daß sie weiterhin eine Einrichtung zum Umwälzen der Teilchen enthält, daß die besagte Anodenanordnung beweglich ist, die Einrichtung zum Umwälzen bildet und eine Trommel ist, die um ihre Achse (17) beweglich und im wesentlichen zylindrisch ist, und daß die besagte Trommel aus einem Isoliermaterial besteht und mit Stäben (6) ausgerüstet ist, die im wesentlichen entlang der Erzeugenden des Zylinders angeordnet sind, wobei die Stäbe mit einem leitenden Kranz (3) zur Stromversorgung verbunden sind, und daß (ii) die Kathodenanordnung sich in der Trommel befindet.

**11.** Vorrichtung nach Anspruch 10, dadurch gekennzeichnet, daß die Stäbe aus einem Material bestehen, das aus der Gruppe gewählt ist, die aus Graphit und zusammengesetzten Materialien auf der Grundlage von Kohlefasern und von diesen auf der Grundlage von Graphitfasern besteht.

**12.** Vorrichtung nach einem der Ansprüche 10 oder 11, dadurch gekennzeichnet, daß die Kathodenanordnung aus einem oxidationsfesten Rohr (10), einem oxidationsfesten Gitterwerk (11) und einem Schutz aus einem elastischen isolierenden Material (12) besteht.

**13.** Vorrichtung nach einem der Ansprüche 10 bis 12, dadurch gekennzeichnet, daß die Stäbe an der Innenfläche des Zylinders angebracht sind.

**14.** Vorrichtung nach einem der Ansprüche 10 bis 13, dadurch gekennzeichnet, daß die Stäbe nur an einem Teil der Trommel Leiter sind.

**15.** Vorrichtung nach einem der Ansprüche 10 bis 14, dadurch gekennzeichnet, daß die Kathode von der Anode verschieden ist und daß die Anode und die Kathode so angeordnet sind, daß der Strom direkt von der einen zur anderen quer durch das zu reinigende Fluid geht.

**16.** Vorrichtung nach einem der Ansprüche 10 bis 15, dadurch gekennzeichnet, daß die Kathode massiv ist.

**17.** Vorrichtung nach den Ansprüchen 10 bis 16, dadurch gekennzeichnet, daß die Trommelachse im wesentlichen horizontal liegt.

FIG. 2

FIG. 1

ENSEMBLE
ANODIQUE 1

FIG.3

ENSEMBLE
CATHODIQUE 8

FIG_4